# EUROPÄISCHE PATENTSCHRIFT

(11) **EP 1 323 616 B1**
(45) Veröffentlichungstag und Bekanntmachung des Hinweises auf die Patenterteilung: **10.08.2005**
(21) Anmeldenummer: 02027676.2
(22) Anmeldetag: 12.12.2002
(51) Int. Cl.: B62D 1/04, B22F 3/11

(54) **Fahrzeuglenkrad aus Metallschaum und Verfahren zu seiner Herstellung**
Vehicle steering wheel from foamed metal and method for producing the same
Volant de véhicule en mousse métallique et méthode pour produire celui-ci

(30) Priorität: 13.12.2001 DE 10161348
(43) Veröffentlichungstag der Anmeldung: 02.07.2003
(73) Patentinhaber: TRW Automotive Safety Systems GmbH, 63743 Aschaffenburg (DE)
(72) Erfinder: Derrick, John-Oliver, 97265 Hettstadt (DE)
(74) Vertreter: Sulzbach, Werner, Dipl.-Chem. Dr.

(56) Entgegenhaltungen:
- EP-A- 0 795 456
- DE-A- 19 717 894
- GB-A- 1 571 902
- US-A- 4 713 277
- US-A- 5 151 246
- US-B1- 6 238 506
- PATENT ABSTRACTS OF JAPAN vol. 010, no. 081 (M-465), 29. März 1986 (1986-03-29) & JP 60 222370 A (MITSUBISHI DENKI KK), 6. November 1985 (1985-11-06)

## Beschreibung

Die Erfindung betrifft ein Fahrzeuglenkrad mit einem Lenkradskelett und ein Verfahren zu einer Herstellung, wobei das Lenkradskelett ganz oder teilweise aus einem Schaummaterial hergestellt ist. Ein solches Lenkrad Nach dem Oberbegriff des Anspruchs 1, ist aus der JP 60-222 370 A bekannt.

Für Lenkradskelette besteht generell die Forderung nach niedrigem Gewicht bei hoher mechanischer Belastbarkeit. Üblicherweise werden Lenkradskelette aus Stahl oder Stahlblech hergestellt. Darüber hinaus ist eine Herstellung durch Magnesiumdruckguß oder Aluminiumdruckguß beschrieben worden. Auch eine Kombination der genannten Materialien kann verwendet werden. So sind beispielsweise Lenkradskelette bekannt, die aus verzinkten Blechteilen bestehen und eine angegossene Nabe aus einer Magnesiumlegierung aufweisen. Weiterhin sind Lenkradskelette bekannt, bei denen der Lenkradkranz und die Lenkradspeichen aus Rund- bzw. Flachstahl bestehen und eine Nabe aus Aluminiumdruckguß gefertigt ist, in die die Lenkradspeichen eingegossen sind.

Ein Nachteil der bekannten Lenkradskelette besteht darin, daß die Forderung nach hoher Festigkeit dieser Bauteile bei gleichzeitig niedrigem Gewicht nicht optimal erreicht wird. So kann durch die Verwendung von Stahl als Werkstoff eine hohe mechanische Festigkeit des Skeletts und insbesondere des Lenkradkranzes gewährleistet werden. Die so hergestellten Skelette sind jedoch zu schwer und entsprechen nicht mehr den Forderungen der Automobilindustrie. Der Einsatz von Magnesium und Aluminium als Werkstoff für die genannten Bauteile führt zwar zu einem niedrigeren Gewicht. Jedoch erfüllen die daraus hergestellten Bauteile zum Teil ebenfalls nicht die gestiegenen Forderungen an die Festigkeit im Falle eines Fahrzeugunfalls.

Neue Entwicklungen zeigen, daß Metallschäume auf der Grundlage von Aluminium oder Magnesium ebenfalls als Leichtbau-Werkstoffe geeignet sind. Ein pulvermetallurgisches Verfahren zur Herstellung eines Aluminiumschaums ist beispielsweise in der DE 40 18 360 C1 beschrieben. Die Druckschrift enthält aber lediglich den Vorschlag, Metallschäume zur Herstellung von Crashzonen und Seitenteilen von Fahrzeugen zu verwenden. Weitere Verfahren zur Herstellung von Metallschäumen und daraus gebildeten Formkörpern sind in der DE 199 07 855 C1 und der DE 197 17 894 A1 offenbart.

Die Erfindung schafft ein Lenkrad mit einem Lenkradskelett, welches den gestiegenen Anforderungen der Automobilindustrie nach solchen Bauelementen mit geringem Gewicht bei gleichzeitig hoher mechanischer Festigkeit genügt. Erfindungsgemäß wird hierzu ein Fahrzeuglenkrad mit einem Lenkradskelett mit den Merkmalen des Anspruchs 1 bereitgestellt.

Besonders bevorzugt weist das Lenkradskelett einen unter Verwendung des Metallschaums hergestellten Lenkradkranz auf.

Der Metallschaum ist vorzugsweise ein Leichtmetallschaum, und besonders bevorzugt ein Metallschaum auf der Grundlage von Aluminium, Magnesium oder deren Legierungen, wie beispielsweise AlCu4, AlSi12, AlSi7, AlMg4 oder AlMg1SiCu. Diese Legierungen zeigen besonders gute Festigkeitswerte.

Als Metallschaum wird in vorteilhafter Weise ein geschlossenzelliger Schaum verwendet, der eine höhere Festigkeit als ein offenporiger Schaum aufweist. Der Metallschaum ist ein sogenannter "syntaktischer" Schaum, der aus in eine Metallmatrix eingebrachten keramischen Hohlkugeln zusammengesetzt ist. Die keramischen Hohlkugeln bestehen vorzugsweise aus Aluminiumoxid, Mullit oder Titanoxid und weisen einen Durchmesser von 1 bis 5 mm bei Wandstärken von zwischen 50 bis 250 µm auf. Die Schüttdichte der Hohlkugeln liegt im Bereich zwischen 0,2 und 0,9 g pro cm³. Die Verwendung syntaktischer Metallschäume ermöglicht die gezielte Einstellung von Produktparametern in einem weiten Bereich.

Die Herstellung der syntaktischen Metallschäume erfolgt im Infiltrationsgußverfahren, wobei die Metallschmelze unter Druck in eine mit den keramischen Hohlkugeln gefüllten Infiltrationskapsel eingepreßt wird. Eine weitere Möglichkeit besteht im Ausgießen einer mit den Hohlkugeln gefüllten Außenhautstruktur oder Hülle, die hier in Form des Lenkradskeletts bzw. Lenkradkranzes gebildet sein kann.

Die erfindungsgemäß verwendbaren Metallschäume weisen bevorzugt eine Dichte von zwischen 0,3 und 1,0 g/cm³ auf. Für die Verwendung als Lenkradskelett besonders vorteilhaft sind Metallschäume mit einem Elastizitätsmodul von zwischen 2,0 und 14 GPa.

Die Metallschäume sind in ein bevorzugt aus Stahl- oder Aluminiumblech gebildetes Blechgerüst oder Blechhülle eingebracht. Hierdurch wird die Formgebung und Herstellung erleichtert, da durch die metallurgische Verbindung zwischen Blechhülle und Metallschaum gleichzeitig die Stabilität der Skelettkonstruktion erhöht wird.

Die erfindungsgemäßen Lenkräder zeigen eine hohe Festigkeit bei niedrigem Gewicht und zeigen insbesondere bei einem Fahrzeugunfall eine hohe Energieabsorption.

Die Erfindung wird nachfolgend anhand der Herstellung eines Lenkradskeletts mit einem Lenkradkranz aus Metallschaum beschrieben. Grundsätzlich können jedoch auch weitere Teile des Lenkradskeletts, wie Speichen und Nabe, unter Verwendung des Metallschaums hergestellt werden.

Gemäß einer besonders bevorzugten Ausführungsform ist das im wesentlichen aus Lenkradnabe, Lenkradspeichen und Lenkradkranz bestehende Lenkradskelett einstückig aus Metallschaum hergestellt.

Zur Erhöhung der Festigkeit ist der Metallschaum mit einem Stahl- oder Aluminiumblech laminiert. Der Metallschaum ist vorzugsweise ein Aluminiumschaum. Es können jedoch auch Metallschäume auf der Grundlage von Aluminiumlegierungen sowie Magnesium oder Magnesiumlegierungen verwendet werden.

Die Eigenschaften des Metallschaums sind über eine geeignete Auswahl der Dichte und Porengröße in einem weiten Bereich einstellbar. Bevorzugt liegt die Porengröße zwischen 1 und 5 mm und die Dichte zwischen 0,3 und 1,0 g/cm³. Für die Verwendung als Lenkradskelett ist ein Elastizitätsmodul von zwischen 2,0 und 14 GPa vorteilhaft.

## Patentansprüche

1. Fahrzeuglenkrad mit einem Lenkradskelett, wobei das Lenkradskelett ganz oder teilweise unter Verwendung eines Schaummaterials hergestellt ist, **dadurch gekennzeichnet, daß** das Schaummaterial ein syntaktischer Metallschaum ist, der aus in eine Metallmatrix eingebrachten keramischen Hohlkugeln zusammengesetzt ist, und daß der Metallschaum in eine Blechhülle eingebracht ist.

2. Fahrzeuglenkrad nach Anspruch 1, **dadurch gekennzeichnet, daß** der Metallschaum ein Leichtmetallschaum ist.

3. Fahrzeuglenkrad nach Anspruch 2, **dadurch gekennzeichnet, daß** der Leichtmetallschaum aus der aus den Schäumen von Aluminium, Magnesium und deren Legierungen bestehenden Gruppe ausgewählt ist.

4. Fahrzeuglenkrad nach einem der Ansprüche 1 bis 3, **dadurch gekennzeichnet, daß** der Metallschaum ein geschlossenzelliger Schaum ist.

5. Fahrzeuglenkrad nach einem der vorhergehenden Ansprüche, **dadurch gekennzeichnet, daß** der Metallschaum eine Dichte von zwischen 0,3 und 1 g/cm³ aufweist.

6. Fahrzeuglenkrad nach einem der vorhergehenden Ansprüche, **dadurch gekennzeichnet, daß** der Metallschaum einen Elastizitätsmodul von zwischen 2,0 und 14 GPa aufweist.

7. Fahrzeuglenkrad nach einem der vorhergehenden Ansprüche, **dadurch gekennzeichnet, daß** die Blechhülle aus Stahl- oder Aluminiumblech gebildet ist.

8. Fahrzeuglenkrad nach einem der vorhergehenden Ansprüche, **dadurch gekennzeichnet, daß** das Lenkradskelett einen unter Verwendung des Metallschaums hergestellten Lenkradkranz aufweist.

9. Verfahren zur Herstellung eines Fahrzeuglenkrads mit einem Lenkradskelett, welches die folgenden Schritte umfaßt: Bereitstellen von keramischen Hohlkugeln in einer Form und Einbringen einer Metallschmelze in die Form durch Infiltration unter Druck oder Gießen, wobei als Form eine Hülle aus Metallblech verwendet wird, in der die keramischen Hohlkugeln angeordnet werden.

## Claims

1. A vehicle steering wheel comprising a steering wheel skeleton, the steering wheel skeleton being entirely or partially made by using a foam material, **characterized in that** the foam material is a syntactic metal foam which is composed of ceramic hollow beads introduced into a metal matrix, and that the metal foam is introduced into a sheet metal shell.

2. The vehicle steering wheel according to claim 1, **characterized in that** the metal foam is a lightweight metal foam.

3. The vehicle steering wheel according to claim 2, **characterized in that** the lightweight metal foam is selected from the group consisting of foams of aluminum, magnesium and their alloys.

4. The vehicle steering wheel according to any of claims 1 to 3, **characterized in that** the metal foam is a closed-cell foam.

5. The vehicle steering wheel according to any of the preceding claims, **characterized in that** the metal foam has a density of between 0.3 and 1.0 g/cm³.

6. The vehicle steering wheel according to any of the preceding claims, **characterized in that** the metal foam has a modulus of elasticity of between 2.0 and 14 GPa.

7. The vehicle steering wheel according to any of the preceding claims, **characterized in that** the sheet metal shell is made of steel sheet or aluminum sheet.

8. The vehicle steering wheel according to any of the preceding claims, **characterized in that** the steering wheel skeleton has a steering wheel rim made by using the metal foam.

9. A method of manufacturing a vehicle steering wheel comprising a steering wheel skeleton, the method comprising the following steps: providing ceramic hollow beads in a mold and introducing a molten metal into the mold by means of infiltration under pressure or by casting, the ceramic hollow beads being arranged in a shell made of sheet metal which is used for the mold.

## Revendications

1. Volant de direction de véhicule comportant un squelette de volant de direction, le squelette de volant de direction étant fabriqué entièrement ou partiellement en utilisant un matériau en mousse, **caractérisé en ce que** le matériau en mousse est une mousse métallique syntactique qui est composée par des billes creuses en céramique introduites dans une matrice métallique, et **en ce que** la mousse métallique est introduite dans une enveloppe de tôle.

2. Volant de direction selon la revendication 1, **caractérisé en ce que** la mousse métallique est une mousse de métal léger.

3. Volant de direction selon la revendication 2, **caractérisé en ce que** la mousse de métal léger est choisie parmi le groupe constitué par les mousses d'aluminium, de magnésium et par leurs alliages.

4. Volant de direction selon l'une des revendications 1 à 3, **caractérisé en ce que** la mousse métallique est une mousse à cellules fermées.

5. Volant de direction selon l'une des revendications précédentes, **caractérisé en ce que** la mousse métallique présente une densité entre 0,3 et 1 g/cm³.

6. Volant de direction selon l'une des revendications précédentes, **caractérisé en ce que** la mousse métallique présente un module d'élasticité entre 2,0 et 14 GPa.

7. Volant de direction selon l'une des revendications précédentes, **caractérisé en ce que** l'enveloppe de tôle est formée par de la tôle d'acier ou d'aluminium.

8. Volant de direction selon l'une des revendications précédentes, **caractérisé en ce que** le squelette de volant de direction présente une couronne de volant de direction fabriquée en utilisant la mousse métallique.

9. Procédé de fabrication d'un volant de direction de véhicule, comportant un squelette de volant de direction, qui comprend les étapes suivantes : Fourniture de billes creuses en céramique dans un moule et introduction d'un métal en fusion dans le moule par infiltration sous pression ou par coulée, dans lequel on utilise comme moule une enveloppe en tôle métallique dans laquelle sont agencées les billes creuses en céramique.
